# EUROPÄISCHE PATENTANMELDUNG

(11) **EP 4 438 219 A1**
(43) Veröffentlichungstag der Anmeldung: **02.10.2024**
(21) Anmeldenummer: 23165474.0
(22) Anmeldetag: 30.03.2023
(51) Int. Cl.: B23K 26/14, B23K 26/342, B23K 26/352, B23K 26/60, B23K 26/34

(54) **VERFAHREN UND ANLAGE ZUM METALLISCHEN BESCHICHTEN**

(71) Anmelder: Sturm Maschinen- & Anlagenbau GmbH, 94330 Salching (DE)
(72) Erfinder: KESTING, Marc, 94330 Salching (DE); JANKER, Marco, 94377 Steinach (DE); MARTIN, Carlos, 94469 Deggendorf (DE); NERL, Stefan, 94315 Straubing, DE (DE)
(74) Vertreter: Wunderlich & Heim Patentanwälte PartG mbB

(57) **Zusammenfassung**

Die Erfindung betrifft ein Verfahren zum metallischen Beschichten einer ebenen Bearbeitungsfläche eines Werkstücks, durch Laserauftragsschweißen mittels eines Beschichtungskopfes, welcher eine Austrittsöffnung für einen Laserstrahl und mindestens eine dazu versetzte Austrittsdüse für ein Metallpulver aufweist. Durch die mindestens eine Austrittsdüse wird Metallpulver auf die zu beschichtende Bearbeitungsfläche aufgedüst und dabei von dem Laserstrahl zum Bilden einer Beschichtung aufgeschmolzen. Dabei wird der Beschichtungskopf über die Bearbeitungsfläche bewegt. Erfindungsgemäß ist vorgesehen, dass die Bearbeitungsfläche vor dem Beschichten mit einer Mikrostruktur versehen wird.

Ferner betrifft die Erfindung eine Anlage zum Ausführen des erfindungsgemäßen Verfahrens.

## Beschreibung

Die Erfindung betrifft ein Verfahren zum metallischen Beschichten einer ebenen Bearbeitungsoberfläche eines Werkstücks. Hierbei kann es sich um eine ringscheibenförmige Bearbeitungsfläche einer Bremsscheibe handeln. Die Beschichtung wird durch Auftragsschweißen mit Hilfe eines Beschichtungskopfes durchgeführt, welcher Austrittsöffnungen für einen Laserstrahl und mindestens eine dazu versetzte Austrittsdüse für ein Metallpulver aufweist. Durch die mindestens eine Austrittsdüse wird Metallpulver auf die zu beschichtende Bearbeitungsfläche aufgedüst und dabei von dem Laserstrahl zum Bilden einer Beschichtung aufgeschmolzen. Der Beschichtungskopf wird hierbei über die Bearbeitungsfläche bewegt.

Ferner betrifft die Erfindung eine Anlage zum metallischen Beschichten eines Werkstücks, insbesondere einer ringscheibenförmigen Bearbeitungsfläche einer Bremsscheibe, mittels Laserauftragsschweißen mit einem Beschichtungskopf. Dieser weist eine Austrittsöffnung für einen Laserstrahl und mindestens eine dazu versetzte Austrittsdüse für ein Metallpulver auf. Der Beschichtungskopf ist ausgebildet, durch die mindestens eine Austrittsdüse Metallpulver auf die Bearbeitungsfläche (30) aufzudüsen und das Metallpulver dabei von dem Laserstrahl unter Ausbildung einer Beschichtung auszuschmelzen. Hierbei ist der Beschichtungskopf über die Bearbeitungsfläche bewegbar.

Derartige Beschichtungsverfahren werden, insbesondere bei Bremsscheiben, verwendet, um auf Bremsscheiben abriebarme Flächen zu erzeugen, so dass die Bremsscheiben im Betrieb eine längere Verwendungsdauer haben. Auch kann je nach genauem Material, welches laserauftragsgeschweißt wird, der entstehende Abrieb beeinflusst werden, was insbesondere in Bezug auf steigende Umweltanforderungen Vorteile bringt.

Mittels des Lasers wird das Metallpulver, welches auf die Bearbeitungsfläche aufgedüst wird, geschmolzen und somit mit der Bearbeitungsfläche verbunden. Problematisch ist es, dass teilweise der Laserstrahl, welcher zum Schmelzen verwendet wird, von der Bearbeitungsfläche zurück zum Beschichtungskopf reflektiert wird. Geschieht dies in einem ungünstigen Winkel, kann es dazu führen, dass die Düsen, aus denen das Metallpulver ausgedüst wird, vom reflektierten Laserstrahl getroffen werden und so Metallpulver bereits in den Düsen schmilz und die Düsen verstopft. Dies führt dazu, dass der Beschichtungskopf aufwändig gereinigt werden muss und das Beschichtungsverfahren unterbrochen werden muss. Somit müssen öfters Wartungsintervalle zwischen den Beschichtungsvorgängen vorgesehen werden.

Daher liegt der Erfindung die **Aufgabe** zugrunde, ein Beschichtungsverfahren und eine Anlage zum metallischen Beschichten eines Werkstücks anzugeben, welche effizienter durchgeführt beziehungsweise betrieben werden kann.

Diese Aufgabe wird erfindungsgemäß durch ein Verfahren zum metallischen Beschichten einer ebenen Oberfläche mit den Merkmalen des Anspruchs 1 und mit einer Anlage zum mechanischen Beschichten eines Werkstückes mit den Merkmalen des Anspruchs 10 gelöst. Bevorzugte Ausführungsformen der Erfindung sind in den abhängigen Ansprüchen sowie in der Figurenbeschreibung erläutert.

Das erfindungsgemäße Verfahren zum metallischen Beschichten ist dadurch gekennzeichnet, dass die Bearbeitungsfläche vor dem Beschichten mit einer Mikrostruktur versehen wird, durch welche beim Auftreffen eines Laserstrahls auf die Bearbeitungsfläche eine ungerichtete Diffusion des Laserstrahls bewirkt wird. Anders ausgedrückt wird durch einen Bearbeitungsschritt vor dem Beschichten die Oberfläche des zu beschichtenden Werkstückes behandelt, so dass keine glatten Mikrooberflächen mehr vorhanden sind, welche bei Reflektion den gesamten Laserstrahl in Richtung des Beschichtungskopfes reflektieren würden.

Ein Grundgedanke der Erfindung kann darin gesehen werden, die glatten Oberfläche entsprechend aufzurauen, so dass der Laserstrahl bei Reflektion so gestreut wird, dass maximal nur Teile des Laserstrahls zurück zum Beschichtungskopf reflektiert werden. Im Sinne der Erfindung kann als Mikrostruktur insbesondere eine unregelmäßig aufgeraute Oberfläche verstanden werden, die insbesondere eine Rauigkeit aufweist, die einzelne Flächen besitzt, die deutlich geringer Ausdehnung aufweisen, als die Breite des verwendeten Laserstrahls. Gerade dies führt dazu, dass jeweils nur Teile des Laserstrahls in dieselbe Richtung reflektiert werden.

Eine Möglichkeit, die Bearbeitungsfläche mit der Mikrostruktur zu versehen ist, wenn diese spanabhebend bearbeitet wird. Hierbei wird während oder nach der spanabhebenden Bearbeitung die Mikrostruktur ausgebildet. Eine spanabhebende Bearbeitung wird gerade bei der Herstellung von Bremsscheiben oft ausgeführt, um die Oberfläche der Rohlinge, die zur Herstellung der Bremsscheiben verwendet werden, zu vergleichmäßigen beziehungsweise zu glätten. Hierbei kann entsprechend der Erfindung zusätzlich Zeit gleich die Mikrostruktur aufgebracht werden. Alternativ kann die Mikrostruktur auch nach der spanabhebenden Bearbeitung aufgebracht werden.

Grundsätzlich kann die Mikrostruktur in beliebiger Weise erzeugt werden. Bevorzugt ist es, wenn die Mikrostruktur durch Schleifen, Honen, Läppen, Sandstrahlen, Drehen und/oder eine Laserbearbeitung vor dem Beschichten auf die Bearbeitungsfläche aufgebracht wird.

Je nach Grundmaterial der Oberfläche bieten sich verschiedene Verfahren an. Bei der Auswahl der Verfahren spielt es eine Rolle, wie und ob die Bearbeitungsfläche zuvor mit Werkzeugen bearbeitet wurde. So kann es beispielsweise sein, dass die Bearbeitungsfläche zuvor mit einem Drehwerkzeug bearbeitet wird, so dass dann lediglich ein anderes Drehwerkzeug verwendet wird, um die Mikrostruktur zu erzeugen. Dies ermöglicht einen effizienten Verfahrensablauf, da keine neuen Werkzeugmaschinen zur Bearbeitung eingesetzt werden müssen.

Vorteilhaft ist es, wenn das Werkstück durch Gießen, Schmieden oder Stanzen ausgebildet wird und die Bearbeitungsfläche spanabhebend, insbesondere durch Drehen oder Fräsen, an dem Werkstück ausgebildet wird. Es hat sich gezeigt, dass durch die oben beschriebenen Verfahren hierbei besonders effizient eine Mikrostruktur ausgebildet werden kann.

Vorteilhafterweise weist die Mikrostruktur einen mittleren Rauwert zwischen 0,1 µm bis 50 µm, bevorzugt zwischen 0,2 µm bis 1 µm auf. Hierbei ist unter anderem auch die Breite des Laserstrahls im Auftreffbereich auf der Bearbeitungsfläche wichtig. Wie erläutert, ist es wünschenswert, dass die Rauigkeit so hoch ist, dass in dem Bereich des Auftreffens beziehungsweise im Bereich der Fläche des Auftreffens eine Vielzahl von verschieden ausgerichteten Oberflächen der Struktur besteht, so dass erreicht wird, dass der Laserstrahl in unterschiedliche Richtungen reflektiert wird.

Besonders effizient kann die Erfindung eingesetzt werden, wenn ein Bearbeitungskopf verwendet wird, bei welchem eine mittige Austrittsöffnung für den Laserstrahl und mehrere ringförmige um die Austrittsöffnung angeordnete Austrittsdüsen angeordnet sind. Gerade bei einer derartigen Anordnung ist es bei herkömmlich Verfahren zum Beschichten der Oberflächen oft der Fall, dass der zentrale Laserstrahl durch Reflektion auf die benachbarten Austrittsdüsen reflektiert wird und es zu Anschmelzungen in oder an den Austrittsdüsen kommt. Grundsätzlich kann die Erfindung jedoch auch mit anders ausgebildeten Bearbeitungsköpfen verwendet werden.

Der Laserstrahl kann senkrecht oder auch in einem Winkel auf die Barbeitungsfläche gerichtet werden. Versuche mit der Erfindung haben gezeigt, dass durch die Mikrostruktur unabhängig von Auftreffwinkel des Laserstrahls auf die zu beschichtende Oberfläche eine Vollreflektion des Laserstrahls in Richtung des Beschichtungskopfes und damit auch der Beschichtungsdüsen minimiert und sogar komplett verhindert werden kann.

Bevorzugt ist es, wenn die mindestens eine Austrittsdüse in einem Anstellwinkel zur Richtung des Laserstrahls und/oder zur Bearbeitungsfläche gerichtet wird, wobei der Anstellwinkel insbesondere zwischen 1° bis 30° beträgt. Diese Ausrichtung ermöglicht es, dass das Metallpulver auf den Bereich aufgedüst wird, an dem der Laser auf die zu bearbeitende Oberfläche trifft. Die Anordnung ist insbesondere bei einem zentral angeordneten Laser mit konzentrisch darum herum angeordneten Austrittsdüsen vorteilhaft.

Bevorzugt ist, wenn das Werkstück als eine Bremsscheibe mit einer ringförmigen Bearbeitungsfläche ausgebildet ist, wobei die ringförmige Bearbeitungsfläche vor dem Aufbringen der definierten Mikrostruktur durch Drehen spanabhebend bearbeitet wird, wobei eine makroskopische Rillenstruktur gebildet wird und wobei die makroskopische Rillenstruktur durch Aufbringen einer Mikrostruktur beseitigt und/oder überlagert wird.

Beim Vorbereiten einer Bearbeitungsfläche einer Bremsscheibe durch spanabhebendes Drehen entsteht oft eine makroskopische Rillenstruktur, welche dann beim Beschichten mittels Auftragsschweißen dazu führt, dass der Laser in Richtung der Austrittdüsen des Metallpulvers reflektiert wird. Dies ist insbesondere dann der Fall, wenn gerade Flanken vorhanden sind.

Durch das anschließende Aufbringen der Mikrostruktur auf die makroskopische Rillenstruktur wird diese zerstöret, so dass der Laser nur noch diffus reflektiert wird. So kann vermindert und sogar verhindert werden, dass einen Anschmelzen des Metallpulvers an oder in den Austrittsdüsen auftritt.

Ferner betrifft die Erfindung eine Anlage zum metallischen Beschichten eines Werkstückes, insbesondere einer ringscheibenförmigen Bearbeitungsfläche einer Bremsscheibe mittels Laserauftragsschweißen mit einem Beschichtungskopf, welcher eine Austrittsöffnung für einen Laserstrahl und mindestens eine dazu versetzte Austrittsdüse für Metallpulver aufweist. Hierbei ist der Beschichtungskopf so ausgebildet, dass er durch die mindestens eine Austrittsdüse Metallpulver auf die Bearbeitungsfläche ausdüst und das Metallpulver dabei von dem Laserstrahl unter Ausbildung einer Beschichtung aufgeschmolzen wird. Hierbei ist der Beschichtungskopf über die Bearbeitungsfläche bewegbar. Diese Anlage wird entsprechend dem erfindungsgemäßen Verfahren betrieben und ist entsprechend ausgebildet.

Im Folgenden wird die Grundlage der Erfindung anhand eines Ausführungsbeispiels und schematischen Zeichnungen erläutert. In diesen Figuren zeigen:
- Fig. 1: eine Skizze zur Erläuterung des erfindungsgemäßen Beschichtungsverfahrens; und
- Fig. 2: eine Skizze zur Erläuterung eines Beschichtungsverfahrens nach dem Stand der Technik.

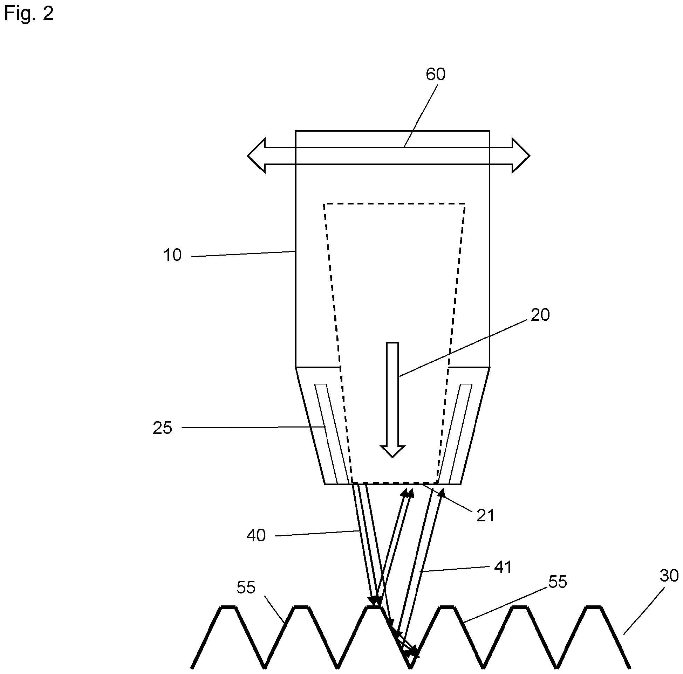

In Figur 2 ist ein Beschichtungskopf 10 gezeigt, wie er bei einem Verfahren nach dem Stand der Technik verwendet wird. Der Beschichtungskopf 10 weist einen zentralen Laserstrahl 20 auf, welcher durch eine Austrittsöffnung 21 in Richtung einer Bearbeitungsfläche 30 eines Werkstücks ausgestrahlt wird. Um die Beschichtung aufzubringen, wird zeitgleich über Austrittdüsen 25, welche um die Austrittsöffnung 21 angeordnet sind, ein Metallpulver in Richtung der Bearbeitungsfläche 30 ausgedüst und auf diese aufgedüst.

Mittels des Laserstrahls 20 wird das auf der Bearbeitungsfläche 30 vorhandene Metallpulver angeschmolzen und so mit der Bearbeitungsoberfläche 30 verbunden.

Wenn beispielsweise eine Bremsscheibe beschichtet wird, wurde diese, um die Oberfläche zu glätten, zuvor mit einem spanabhebenden Verfahren, beispielsweise Drehen, bearbeitet. Hierbei entsteht eine regelmäßige Struktur, welche in Figur 2 durch entsprechende Flanken dargestellt ist. Die Flanken, die oft in der Größenordnung der Breite beziehungsweise der Fläche des Laserstrahls 20 dimensioniert sind, führen dazu, dass ein Teil des Laserstrahls 20 wieder zurück zum Beschichtungskopf 10 reflektiert werden kann. Dies ist in Figur 2 durch den Strahlengang 40 des Laserstrahls 20 und den entsprechenden Reflektionen 41 verdeutlicht.

Das Zurückstrahlen des Laserstrahls 20 in Richtung der Austrittsdüsen 25 führt dazu, dass Beschichtungspulver beispielsweise Metallpulver, welches ausgedüst wird, bereits an oder im Bereich der Austrittsdüsen 25 schmilzt und dort anbäckt. Hierdurch wird der Durchmesser der Austrittsdüsen 25 verringert, so dass das Ausdüsen sogar zum Teil verhindert wird. Um dies zu verhindern, wurde herkömmlicherweise in kurzen Abständen Wartungsintervalle vorgesehen, um die Austrittsdüsen 25 zu reinigen.

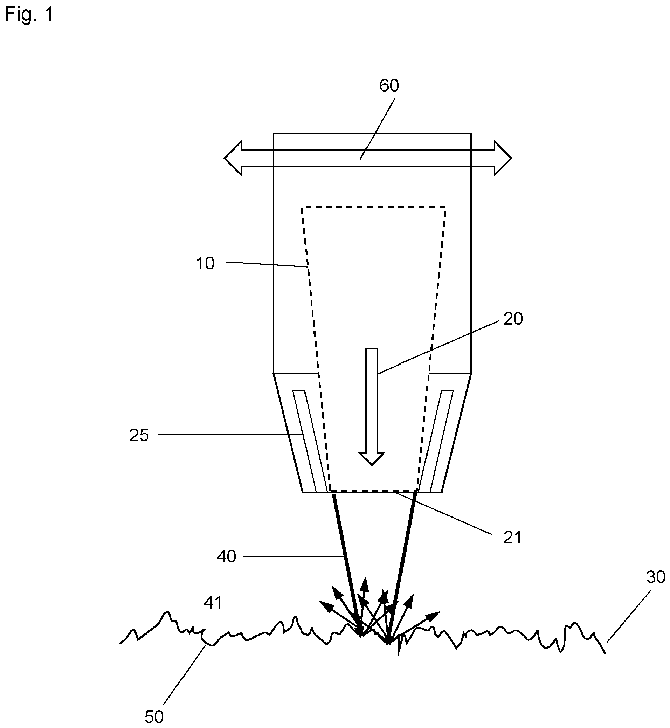

Das erfindungsgemäße Verfahren wird nun in Bezug auf Figur 1 näher erläutert. Wobei gleiche Bauteile nicht erneut erläutert werden, und dieselben Bezugszeichen nutzen.

Grundsätzlich kann hierbei der Beschichtungskopf 10 analog zur dem der Figur 1 aufgebaut sein. Durch das Behandlen der Bearbeitungsfläche 30 weist diese jedoch keine regelmäßigen Flanken auf, sondern eine Mikrostruktur 50, welche unregelmäßige Flanken und Flächen aufweist, die bevorzugt kleiner sind als der Durchmesser beziehungsweise die Fläche des Laserstrahls 20. Dies führt dazu, dass - wie durch den Strahlengang 40 verdeutlicht - die Reflektionen 41 nicht mehr oder nur in geringem Maß zurück zu den Austrittsdüsen 25 reflektiert werden. So findet kein oder erheblich weniger Anschmelzen des Metallpulvers im Bereich der Austrittsdüsen 25 statt. Folglich müssen die Austrittsdüsen deutlich seltener gereinigt werden.

Während der Beschichtung kann der Beschichtungskopf 10 wie durch die Pfeile 60 angezeigt, über die zu beschichtende Oberfläche 30 bewegt werden.

Dies hat zur Folge, dass die Beschichtungsanlage effizienter und kostensparender betrieben werden kann.

## Patentansprüche

1. Verfahren zum metallischen Beschichten einer ebenen Bearbeitungsfläche (30) eines Werkstücks, insbesondere einer ringscheibenförmigen Bearbeitungsfläche (30) einer Bremsscheibe, durch Laserauftragsschweißen mittels eines Beschichtungskopfes (10), welcher eine Austrittsöffnung (21) für einen Laserstrahl (20) und mindestens eine dazu versetzte Austrittsdüse (25) für ein Metallpulver aufweist,
wobei durch die mindestens eine Austrittsdüse (25) Metallpulver auf die zu beschichtende Bearbeitungsfläche (30) aufgedüst und dabei von dem Laserstrahl (20) zum Bilden einer Beschichtung aufgeschmolzen wird, wobei der Beschichtungskopf (10) über die Bearbeitungsfläche (30) bewegt wird,
**dadurch gekennzeichnet,**
**dass** die Bearbeitungsfläche (30) vor dem Beschichten mit einer Mikrostruktur versehen wird, durch welche bei Auftreffen eines Laserstrahls (20) auf die Bearbeitungsfläche (30) eine ungerichtete Diffusion des Laserstrahls (20) bewirkt wird.

2. Verfahren nach Anspruch 1,
**dadurch gekennzeichnet ,**
**dass** die Bearbeitungsfläche (30) spanabhebend bearbeitet wird, wobei während oder nach der spanabhebenden Bearbeitung die Mikrostruktur (50) ausgebildet wird.

3. Verfahren nach Anspruch 1 oder 2,
**dadurch gekennzeichnet ,**
**dass** die Mikrostruktur (50) durch Schleifen, Honen, Läppen, Sandstrahlen, Drehen und/oder eine Laserbearbeitung auf die Bearbeitungsfläche (30) vor dem Beschichten aufgebracht wird.

4. Verfahren nach einem der Ansprüche 1 bis 3,
**dadurch gekennzeichnet ,**
**dass** das Werkstück durch Gießen, Schmieden oder Stanzen gebildet wird und dass die Bearbeitungsfläche (30) spanabhebend, insbesondere durch Drehen oder Fräsen, an dem Werkstück ausgebildet wird.

5. Verfahren nach einem der Ansprüche 1 bis 4,
**dadurch gekennzeichnet ,**
**dass** die Mikrostruktur einen Mittenrauwert zwischen 0,1 µm bis 50 µm, bevorzugt 0,2 µm bis 1,0 µm aufweist.

6. Verfahren nach einem der Ansprüche 1 bis 5,
**dadurch gekennzeichnet ,**
**dass** ein Bearbeitungskopf (10) verwendet wird, bei welchem eine mittige Austrittsöffnung (21) für den Laserstrahl (20) und mehrere ringförmig um die Austrittsöffnung (21) angeordnete Austrittsdüsen (25) angeordnet sind.

7. Verfahren nach einem der Ansprüche 1 bis 6,
**dadurch gekennzeichnet ,**
**dass** der Laserstrahl (20) senkrecht oder in einem Winkel auf die Bearbeitungsfläche (30) gerichtet wird.

8. Verfahren nach einem der Ansprüche 1 bis 7,
**dadurch gekennzeichnet ,**
**dass** die mindestens eine Austrittsdüse (25) in einem Anstellwinkel zur Richtung des Laserstrahls (20) und/oder zur Bearbeitungsfläche (309 gerichtet wird, wobei der Anstellwinkel insbesondere zwischen 1° bis 30° beträgt.

9. Verfahren nach einem der Ansprüche 1 bis 8,
**dadurch gekennzeichnet ,**
**dass** das Werkstück als eine Bremsscheibe mit einer ringförmigen Bearbeitungsfläche (30) ausgebildet wird, wobei die ringförmige Bearbeitungsfläche (30) vor dem Aufbringen der definierten Mikrostruktur durch Drehen spanabhebend bearbeitet wird, wobei eine makroskopische Rillenstruktur gebildet wird, und
**dass** die makroskopische Rillenstruktur durch das Aufbringen der Mikrostruktur (50) beseitigt und/oder überlagert wird.

10. Anlage zum metallischen Beschichten eines Werkstücks, insbesondere einer ringscheibenförmigen Bearbeitungsfläche (30) einer Bremsscheibe, mittels Laserauftragsschweißen mit einem Beschichtungskopf (10), welcher eine Austrittsöffnung (21) für einen Laserstrahl und mindestens eine dazu versetzte Austrittsdüse (25) für ein Metallpulver aufweist,
wobei der Beschichtungskopf (10) ausgebildet ist, durch die mindestens einen Austrittsdüse (25) Metallpulver auf die Bearbeitungsfläche (30) aufzudüsen und das Metallpulver dabei von dem Laserstrahl (20) unter Ausbildung einer Beschichtung auszuschmelzen, wobei der Beschichtungskopf (10) über die Bearbeitungsfläche (30) bewegbar ist,
**dadurch gekennzeichnet ,**
**dass** die Anlage zum Beschichten nach einem Verfahren nach einem der Ansprüche 1 bis 9 ausgebildet ist.
